# EUROPEAN PATENT APPLICATION

(11) **EP 1 568 865 A1**
(43) Date of publication of application: **31.08.2005**
(21) Application number: 05004157.3
(22) Date of filing: 25.02.2005
(51) Int. Cl.: F01N 9/00, F01N 3/023, F02D 41/02, F02D 41/14

(54) **Regeneration of a diesel particulate filter**

(30) Priority: 27.02.2004 JP 2004053407
(71) Applicant: NISSAN MOTOR CO., LTD., Kanagawa-ken (JP)
(72) Inventor: Emi, Masahiko, Yokosuka-shi Kanagawa 238-0023 (JP); Miura, Manabu, Zushi-shi Kanagawa 249-0004 (JP)
(74) Representative: Grünecker, Kinkeldey, Stockmair & Schwanhäusser Anwaltssozietät

(57) **Abstract**

A particulate filter (14) traps particulate matter in the exhaust gas of an internal combustion engine (1). The filter (14) is regenerated by burning the trapped particulate matter in a high temperature atmosphere. A first sensor (17) detects the oxygen concentration of an exhaust gas upstream of the filter (14) as a first concentration. A second sensor (16) detects the oxygen concentration of the exhaust gas downstream of the filter (14) as a second concentration. The controller (25) precisely detects regeneration start and end of the filter (14) by determining that regeneration of the filter (14) has actually started when the difference between the first concentration and second concentration is equal to or greater than a predetermined value (S12), and determining that actual regeneration of the filter (14) has been completed when this difference falls below the predetermined value (S6).

## Description

### FIELD OF THE INVENTION

This invention relates to regeneration of a diesel particulate filter which traps particulate matter in the exhaust gas of a diesel engine.

### BACKGROUND OF THE INVENTION

To trap particulate matter contained in the exhaust gas of a diesel engine, Tokkai Hei 5-240026 published by the Japan Patent Office in 1993 discloses a method of determining a regeneration start timing based on the differential pressure upstream and downstream of a diesel particulate filter (hereafter, referred to as DPF) attached to an exhaust passage. Regeneration of the DPF is stated to be a process wherein the particulate matter deposited on the DPF is heated and burnt, and the DPF is returned to a state in which the DPF can again trap particulate matter. According to this prior art, when the upstream/downstream pressure difference exceeds a fixed value, it is determined that the regeneration start timing has arrived, fuel is supplied to a burner for heating the DPF, and the DPF is heated. If the rate of variation of the differential pressure falls below a fixed value, it is determined that regeneration is complete and heating of the DPF is stopped.

### SUMMARY OF THE INVENTION

Even for the same regeneration degree, the upstream/downstream differential pressure of the DPF is not necessarily the same and depends on the engine running state. When regeneration is partial, i.e., when only a part of the particulate matter trapped by the DPF is burnt and removed, it is difficult to estimate the remaining amount of particulate matter from the differential pressure. Therefore, if the DPF is to be completely regenerated, an increase in fuel injection amount is continued over a longer period than is necessary, and as a result, some fuel is consumed unnecessarily.

It is therefore an object of this invention to improve the precision of regeneration control of a DPF.

In order to achieve the above object, this invention provides a regeneration control device for use with a particulate filter which traps particulate matter in an exhaust gas of an internal combustion engine, wherein the filter is regenerated by burning the trapped particulate matter in a high temperature atmosphere. The device comprises a first sensor which detects an oxygen concentration in the exhaust gas upstream of the filter as a first concentration, a second sensor which detects the oxygen concentration of the exhaust gas downstream of the filter as a second concentration, and a programmable controller programmed to: calculate a difference between the first concentration and second concentration, and determine at least one of a filter actual regeneration start and end based on a comparison of the difference between the first concentration and second concentration with a predetermined value.

This invention also provides a regeneration control method of the particulate filter, comprising detecting an oxygen concentration in the exhaust gas upstream of the filter as a first concentration, detecting an oxygen concentration of the exhaust gas downstream of the filter as a second concentration, calculating a difference between the first concentration and second concentration, and determining at least one of a filter actual regeneration start and end based on a comparison of the difference between the first concentration and second concentration with a predetermined value.

The details as well as other features and advantages of this invention are set forth in the remainder of the specification and are shown in the accompanying drawings.

### BRIEF DESCRIPTION OF THE DRAWINGS

FIG. 1 is a schematic diagram of a diesel engine provided with a DPF regeneration system according to this invention.

FIG. 2 is a flow chart describing a DPF regeneration control routine performed by a controller according to this invention.

FIGs. 3A and 3B are timing charts which show a variation in DPF particulate deposition amount and an excess air factor detected upstream and downstream of the DPF during execution of the DPF regeneration control routine.

FIG. 4 is a timing chart which shows a variation of a difference in the excess air factor detected at the inlet and outlet of the DPF during execution of the DPF regeneration control routine.

### DESCRIPTION OF THE PREFERRED EMBODIMENTS

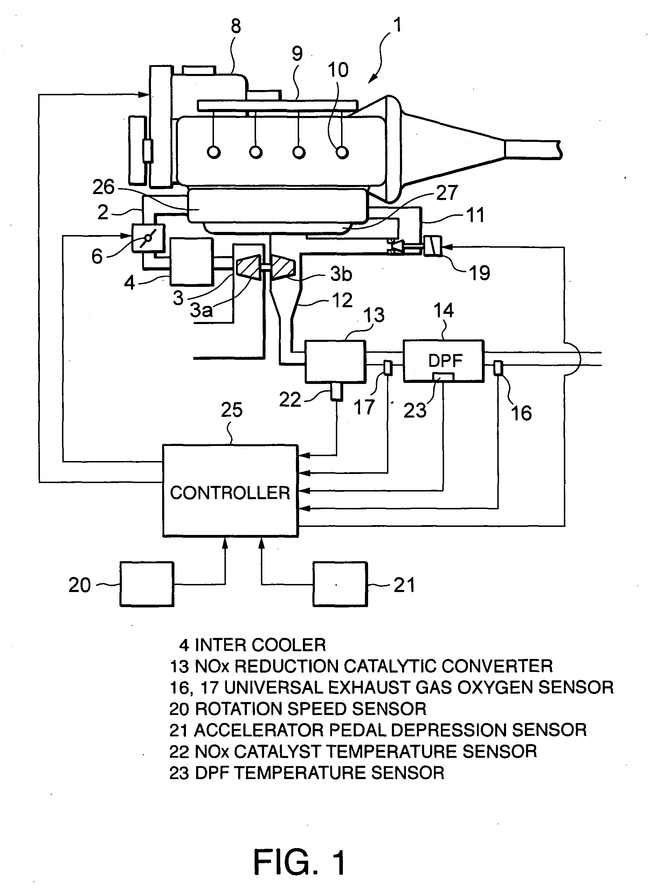

Referring to FIG.1 of the drawings, a four-cylinder diesel engine 1 for vehicles is provided with an intake passage 2 which aspirates air, and an exhaust passage 12 which discharges exhaust gas.

The intake passage 2 is connected to each cylinder of the engine 1 via an intake manifold 26. The exhaust passage 12 is connected to each cylinder via an exhaust manifold 27.

A compressor 3a of a turbocharger 3 which supercharges the intake air, a throttle 6 which adjusts the intake air amount according to a signal from a controller 25, and an intercooler 4 which cools the intake air whereof the temperature has been raised due to supercharging, are provided in the intake passage 2.

The engine 1 is provided with a common-rail type fuel supply system. The fuel supply system comprises a fuel injector 10 which injects fuel into the air aspirated by each cylinder from the intake manifold 26. The fuel supply system comprises a fuel pump 8 which pressurizes fuel of a fuel tank, and a common-rail 9 which stores the pressurized fuel. A valve which responds to a fuel injection pulse signal from the controller 25 is attached to the fuel injector 10, and the fuel stored by the common-rail 9 is injected from the fuel injector 10 when the valve opens.

Thus, a fuel-air mixture of fuel and air is generated in each cylinder. The fuel-air mixture is compressed by reciprocation of the piston of each cylinder, and ignited and burnt due to the heat of compression. Combustion gas is discharged as exhaust gas via the exhaust passage 12 from the exhaust manifold 27.

An exhaust gas recirculation passage (EGR passage) 11 which returns a part of the exhaust gas to the intake passage 2 is connected to the exhaust passage 12. An EGR valve 19 which adjusts the amount of exhaust gas recirculated according to a signal from the controller 25 is installed in the EGR passage 11.

A turbine 3b of the turbocharger 3 is installed in the exhaust passage 12. The turbine 3b shares the same rotation axis as that of the compressor 3a, and rotates the compressor 3a with the energy of the exhaust gas.

A NOx catalytic converter 13 which reduces nitrogen oxides (NOx) in the exhaust gas, and a DPF 14 which traps particulate matter in the exhaust gas, are installed downstream of the turbine 3b of the exhaust passage 12. The DPF 14 is a ceramic filter whereof the surface is coated with a catalyst which traps particulate matter.

The controller 25 which controls the fuel injection amount of the fuel injector 10 of each cylinder, the intake air amount of the throttle 6 and the exhaust gas amount recirculated by the EGR valve 19 comprises a microcomputer comprising a central processing unit (CPU), read-only memory (ROM), random access memory (RAM) and input/output interface (I/O interface). It is also possible to form the controller from plural microcomputers.

The controller 25 performs regeneration control of the DPF 14 via the aforesaid control.

For the aforesaid control, a universal exhaust gas oxygen sensor 17 is installed upstream of the DPF 14 in the exhaust passage 12. A universal exhaust gas oxygen sensor 16 is installed downstream of the DPF 14 in the exhaust passage 12. The universal exhaust gas oxygen sensors 16, 17 are sensors which detect the oxygen concentration of the exhaust gas over a wide range. Since the oxygen concentration of the exhaust gas can be converted to an excess air factor λ of the fuel-air mixture burnt by the engine 1, the detection values of the universal exhaust gas oxygen sensors 16, 17 are represented by the excess air factor λ in the following description. The excess air factor λ is a value obtained by dividing the air/fuel ratio by the stoichiometric air-fuel ratio. The detection values of the universal exhaust gas oxygen sensors 16, 17 are respectively inputted into the controller 25 as signals.

Detection data signals are also input to the controller 25 respectively from a NOx catalyst temperature sensor 22 which detects a temperature of the NOx catalyst 13, a DPF temperature sensor 23 which detects a temperature of the DPF 14, a rotation speed sensor 20 which detects a rotation speed of the engine 1 and an accelerator pedal depression sensor 21 which detects a depression amount of an accelerator pedal with which the vehicle is provided.

Next, the regeneration control of the DPF 14 performed by the controller 25 will be described.

When the amount of particulate matter trapped by the DPF 14 exceeds a given amount, the controller 25 changes the running mode of the engine 1 from an normal running mode to a temperature raising mode so as to regenerate the DPF 14, i.e., burn particulate matter deposited on the DPF 14 and thereby remove it. In the raising mode, the fuel injection amount of the fuel injector 10 is increased. Alternatively, the intake air amount is decreased by decreasing the opening of the throttle 6. Both of these operations increase the exhaust gas temperature, and therefore increase the temperature of the DPF 14.

The controller 25 sets a regeneration flag prior to the actual regeneration start of the DPF 14. The regeneration flag is a flag which shows whether or not regeneration of the DPF 14 is required, unity showing that regeneration is required and zero showing that regeneration is not required. The regeneration flag can be set by various methods.

For example, the exhaust gas pressure difference upstream and downstream of the DPF 14 may be detected, and the regeneration flag set to unity when the exhaust gas pressure difference reaches a predetermined value set according to the running conditions.

Alternatively, the regeneration flag may be set to unity by determining the regeneration demand from a combination of the vehicle travel distance from the immediately preceding regeneration, the integral of the engine rotation speed and the exhaust gas pressure.

These methods are known from references which include the aforesaid prior art, and their detailed description will not be repeated here. However, the controller 25 according to this invention does not change over the mode immediately even if the regeneration flag is unity. The subject matter of this invention does not relate to the setting of the regeneration flag, but to the subsequent processing.

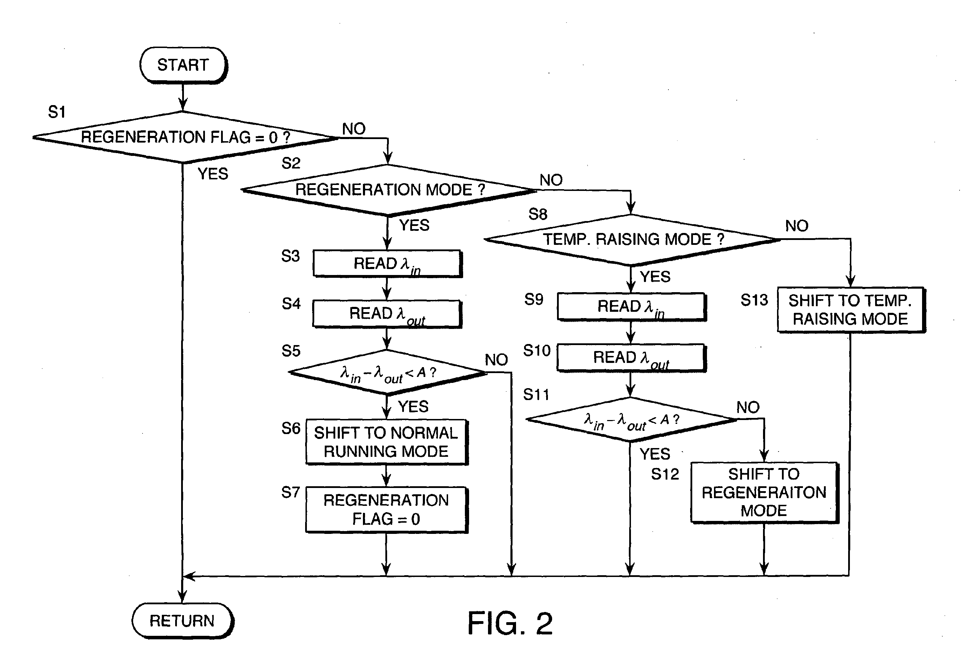

Next, referring to FIG. 2, a DPF regeneration control routine performed by the controller 25 after regeneration flag setup will be described. The controller 25 performs this routine at an interval of ten milliseconds while the engine 1 is running.

In a step S1, the controller 25 determines whether or not the regeneration flag is zero. When the regeneration flag is zero, the controller 25 immediately terminates the routine. When the regeneration flag is unity, in a step S2, the controller 25 determines whether or not the present running mode is the regeneration mode. The running mode may be one of three running modes, i.e., normal running, regeneration and temperature raising. In the regeneration mode, the particulate matter deposited on the DPF 14 is actually burning. In other words, the DPF 14 is being maintained at the temperature required for combustion of particulate matter. In the temperature raising mode, the temperature of the exhaust gas has started to be increased to burn the particulate matter deposited on the DPF 14, but the DPF 14 has not yet reached the temperature required for combustion of particulate matter. The change-over of running mode is performed in following steps S6, S12, and S13. The initial value of the running mode is the normal running mode.

In this routine, only the change-over of running mode is performed, and control of the fuel injector 10, throttle 6 and EGR valve 19 corresponding to each mode is performed by another routine. The other routine relating to the fuel injection of the fuel injector 10 increases the fuel injection amount in the raising mode. In the regeneration mode, it increases the fuel injection amount appropriately so as to maintain a target temperature. In the normal running mode, the fuel injection amount is not increased. As a result of this control, the fuel consumption amount increases in the order temperature raising mode, regeneration mode and normal running mode.

Now, when the determination of the step S2 is affirmative, the controller 25 performs the processing of the steps S8-S13. When the determination of the step S2 is negative, the controller 25 performs the processing of the steps S3-S7.

The steps S2- S7 relate to the determination of completion of regeneration of the DPF 14.

In the step S3, the controller 25 reads the detection value of the universal exhaust gas oxygen sensor 17 upstream of the DPF 14 as an excess air factor *λ*_{*in*}*.* In the following step S4, the controller 25 reads the detection value of the universal exhaust gas oxygen sensor 16 downstream of the DPF 14 as an excess air factor *λ*_{*out*}*.* The excess air factor λᵢₙ corresponds to the first concentration of the claims, and the excess air factor *λ*_{*out*} corresponds to the second concentration of the claims.

In the following step S5, the controller 25 compares the difference between the excess air factors *λ*_{*in*} and *λ*_{*out*} with a predetermined value A. When the difference between the excess air factors *λ*_{*in*} and *λ*_{*out*} is smaller than the predetermined value A, the controller 25, in the step S6, changes over to the normal running mode, and after setting the regeneration flag to zero in the step S7, terminates the routine. When the difference between the excess air factors *λ*_{*in*} and *λ*_{*out*} is not smaller than the predetermined value A, the controller 25 terminates the routine immediately.

The steps S8- S 13 relate to determination of regeneration by the DPF 14.

In the step S8, the controller 25 determines whether or not the present running mode is the temperature raising mode. When the determination is negative, the present running mode is the normal running mode. In this case, in a step S13, the controller 25 terminates the routine after changing the running mode over from the normal running mode to the temperature raising mode.

When the determination of the step S8 is affirmative (i.e., when the present running mode is the temperature raising mode), the controller 25, in a step S9, reads the detection value of the universal exhaust gas oxygen sensor 17 upstream of the DPF 14 as the excess air factor *λ*_{*in*}*.* In the following step

S10, the controller 25 reads the detection value of the universal exhaust gas oxygen sensor 16 downstream of the DPF 14 as the excess air factor *λ*_{*out*}*.*

In the following step S11, the controller 25 compares the difference between the excess air factors *λ*_{*in*} and *λ*_{*out*} with the predetermined value A. When the difference between the excess air factors *λ*_{*in*} and *λ*_{*out*} is smaller than the predetermined value A, the controller 25 terminates the routine immediately. When the difference between the excess air factors *λ*_{*in*} and *λ*_{*out*} is not smaller than the predetermined value A, the controller 25 terminates the routine after changing the running mode over to the regeneration mode in the step S12.

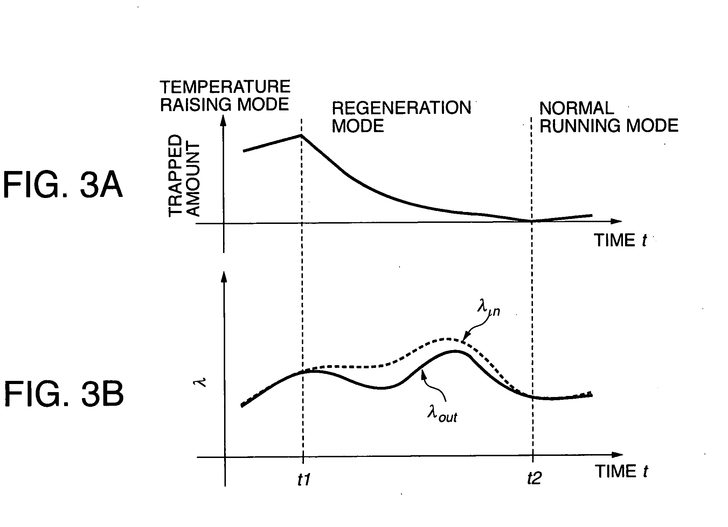

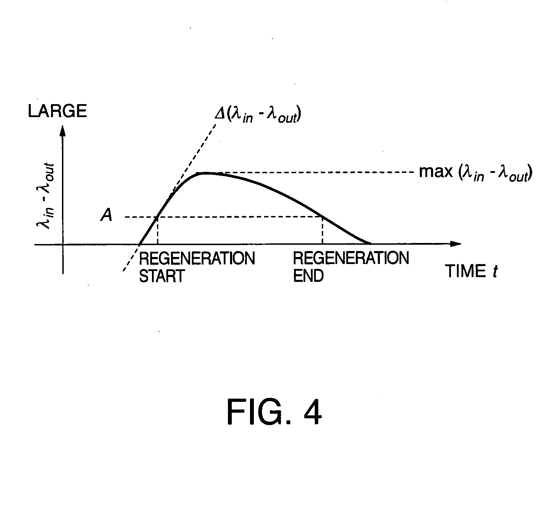

Next, referring to FIGs.3A, 3B and FIG.4, the predetermined value A used for the determination of the steps S5 and S11 will be described.

First, referring to FIGs.3A and 3B, prior to a time t1, while the engine 1 is in the temperature raising mode, the particulate matter deposition amount of the DPF 14 continues increasing, and the particulate matter has not burned. In other words, the oxygen in the exhaust gas which passes through the DPF 14 is not consumed, and the excess air factor *λ*_{*in*} and excess air factor *λ*_{*out*} are therefore substantially identical.

At the time *t1,* the deposition amount of particulate matter starts to decrease. This is because the temperature of the DPF 14 increases due to the temperature raising mode, and the particulate matter starts to bum. Herein, start of particulate matter combustion means regeneration start of the DPF.

As oxygen in the exhaust gas is consumed due to the combustion of particulate matter, as shown in FIG.3B, the excess air factor *λ*_{*out*} after combustion start falls below the excess air factor *λ*_{*in*}*.* As the combustion of particulate matter proceeds, the scale of combustion gradually decreases and oxygen consumption also decreases. In other words, the difference between the excess air factor *λ*_{*in*} and excess air factor *λ*_{*out*} becomes small. When a time t2 is reached, the difference between the excess air factor *λ*_{*in*} and excess air factor *λ*_{*out*} becomes zero, and the combustion of particulate matter, i.e., regeneration of the DPF 14, is terminated.

Referring to FIG. 4, due to the above phenomenon, the difference between the excess air factor *λ*_{*in*} and excess air factor *λ*_{*out*} increases with regeneration start of the DPF 14, and after it reaches a peak value *max (λ*_{*in*} *- λ*_{*out*}*)* at a certain time, it gradually decreases. Therefore, regeneration start and end can be determined with sufficient precision from the difference λᵢₙ *-* λₒᵤₜ between the excess air factor λᵢₙ and excess air factor λₒᵤₜ.

In this embodiment, considering individual differences and age deterioration of sensors, regeneration of the DPF 14 is started when the difference λ_{*in*} *-* λ_{*out*} reaches the predetermined value A, and when the difference λᵢₙ *- λ*_{*out*} is less than the predetermined value A, it is determined that regeneration of the DPF 14 is complete. The predetermined value A is for example set to ten percent of the maximum value of (l_{*in*} - l_{*out*}) when the DPF 14 has not deteriorated. According to this determination method, even if combustion of particulate matter has started locally in part of the DPF 14, a variation appears in the excess air factor λₒᵤₜ downstream of the DPF 14 due to oxygen consumption. This local combustion does not have such a large impact on the exhaust gas pressure difference upstream/downstream of the DPF 14, but a clear difference does appear in the excess air factor λ, i.e., in the oxygen concentration of the exhaust gas. Therefore, the actual regeneration start of the DPF 14 can be more correctly determined as compared with the case where it is determined based on the exhaust gas pressure difference upstream and downstream as in the prior art.

Likewise, by determining the difference λ_{*in*} *-* λ_{*out*} between the excess air factor λᵢₙ and excess air factor λₒᵤₜ, the actual regeneration end of the DPF 14 can also be more correctly determined as compared with the case where it is determined based on the exhaust gas pressure difference upstream/ downstream of the prior art.

As mentioned above, since fuel consumption is different in the raising mode, regeneration mode and normal running mode, by precisely determining the actual regeneration start and regeneration end of the DPF 14 which are boundary lines of these modes, the fuel consumption amount expended on regeneration of the DPF 14 can be suppressed to the absolute minimum.

In the curves for the excess air factor *λ*_{*in*} and excess air factor *λ*_{*out*} during regeneration of the DPF 14 shown in FIG. 3B, there are plural inflection points. This is because in the regeneration mode control performed by the other routine, the excess air factor λᵢₙ upstream of the DPF 14 is controlled so that the combustion rate of particulate matter does not increase excessively. However, even if the curve of the excess air factor *λ*_{*in*} shows such a variation, the excess air factor *λ*_{*out*} downstream of the DPF 14 follows it, so it does not affect the characteristics of the difference λᵢₙ *- λ*_{*out*} between the excess air factor *λ*_{*in*} and excess air factor *λ*_{*out*} shown in FIG. 4.

Referring again to FIG. 2, on the first occasion the routine is performed after the regeneration flag changes over to unity, the regeneration mode is the normal running mode, so the running mode is first changed over to the temperature raising mode in the step S13, and the warmup operation of the DPF 14 is started by the other routine.

As a result, on the next occasion the routine is executed, the determination of the step S2 is negative and the determination of the step S8 is affirmative. The determination of the step S11 is affirmative until combustion of particulate matter is actually started, even if the control of the temperature raising mode is performed. When combustion of particulate matter actually starts and the difference λ_{*in*} *- λ*_{*out*} between the excess air factor λ_{*in*} and excess air factor *λ*_{*out*} reaches the predetermined value

A, the running mode is changed over to the regeneration mode in the step S12.

On subsequent occasions when the routine is executed, the determination of the step S2 is affirmative and control in the regeneration mode is performed by the other routine. The regeneration mode continues until the difference λ_{*in*} *- λ*_{*out*} between the excess air factor *λ*_{*in*} and excess air factor *λ*_{*out*} falls below the predetermined value

A in the step S5. When the difference λ_{*in*} *- λ*_{*out*} between the excess air factor *λ*_{*in*} and excess air factor *λ*_{*out*} falls below the predetermined value

A in the step S5, the running mode is changed over to the normal running mode in the step S6, and the regeneration flag is reset to zero in the step S7. Thereafter, since the determination of the step S1 is affirmative until the regeneration flag is again set to unity by the other routine, this routine is effectively not performed.

As described above, regeneration start and end of the DPF 14 can be grasped with sufficient precision by determining the regeneration start and end of the DPF 14 based on the difference λ_{*in*} *- λ*_{*out*} between the excess air factor *λ*_{*out*} and excess air factor *λ*_{*in*}*.* Therefore, the running time of the engine 1 in the regeneration mode can be suppressed to the absolute minimum, and increase of fuel consumption can be prevented.

The contents of Tokugan 2004-053407, with a filing date of February 27, 2004 in Japan, are hereby incorporated by reference.

Although the invention has been described above by reference to certain embodiments of the invention, the invention is not limited to the embodiments described above. Modifications and variations of the embodiments described above will occur to those skilled in the art, within the scope of the claims.

For example, in the above embodiment, the oxygen concentrations λ_{*in*} and *λ*_{*out*} of the exhaust gas upstream and downstream of the DPF 14 were detected using the universal exhaust gas oxygen sensors 17 and 16, but a suitable effect can still be obtained by using ordinary oxygen sensors which have a large output variation in the vicinity of the stoichiometric air-fuel ratio instead of the universal exhaust gas oxygen sensors.

In the above embodiment, the actual regeneration start and end of the DPF 14 were determined, but this invention can be applied also to only one of these determinations. For example, if the other routine does not distinguish the temperature raising mode and regeneration mode, when performing fuel injection control to make the temperature of the DPF 14 coincide with the target temperature, it is not necessary to determine the actual regeneration start. In this case, a desirable effect in decreasing the fuel consumption for regeneration of the DPR14 can be obtained by determining only the actual regeneration end.

Alternatively, only the actual regeneration start may be determined, and regeneration treatment continued for a fixed time period from the determination. This is because the time until a specified deposition amount of particulate matter is completely burnt at the target temperature, can be considered to be fixed. Also in such a case, a desirable effect in decreasing the fuel consumption for regeneration of the DPR14 can be obtained by precisely determining the regeneration start of the DPF 14 by this invention.

The embodiments of this invention in which an exclusive property or privilege is claimed are defined as follows:

## Claims

1. A regeneration control device for use with a particulate filter (14) which traps particulate matter in an exhaust gas of an internal combustion engine (1), wherein the filter (14) is regenerated by burning the trapped particulate matter in a high temperature atmosphere, the device comprising:
a first sensor (17) which detects an oxygen concentration in the exhaust gas upstream of the filter as a first concentration;
a second sensor (16) which detects the oxygen concentration of the exhaust gas downstream of the filter (14) as a second concentration; and
a programmable controller (25) programmed to:
calculate a difference between the first concentration and second concentration (S5, S11); and
determine at least one of a filter actual regeneration start and end based on a comparison of the difference between the first concentration and second concentration with a predetermined value (S5, S6, S11, S12).

2. The regeneration control device as defined in Claim 1, wherein the controller (25) is further programmed to determine that the actual regeneration of the filter (14) has started when the difference between the first concentration and second concentration is equal to or greater than the predetermined value (S11, S12).

3. The regeneration control device as defined in Claim 2, wherein the high temperature atmosphere is generated by increasing the fuel amount supplied to the engine (1), the increase in the fuel amount supplied to the engine (1) is performed by selectively applying a temperature raising mode wherein the fuel is increased by a first amount, or a regeneration mode wherein the fuel is increased by a second amount which is smaller than the first amount, and the controller (25) is further programmed to perform a change-over from the temperature raising mode to the regeneration mode when the actual regeneration of the filter (14) has started (S12).

4. The regeneration control device as defined in any one of Claim 1 through Claim 3, wherein the controller (25) is further programmed to determine that the actual regeneration of the filter (14) has been completed when the difference between the first concentration and second concentration becomes less than a predetermined value (S5, S6).

5. The regeneration control device as defined in Claim 4, wherein the controller (25) is further programmed to stop increasing the fuel amount supplied when the actual regeneration of the filter (14) has been completed (S6).

6. The regeneration control device as defined in any one of Claim 1 through Claim 5, wherein the first sensor (17) and second sensor (16) respectively comprise a universal exhaust gas oxygen sensor.

7. The regeneration control device as defined in any one of Claim 1 through Claim 6, wherein the first concentration and second concentration are respectively represented by an excess air factor of the burnt fuel-air mixture, and the controller (25) is further programmed to determine at least one of the actual filter regeneration start and end by comparing the difference between the excess air factor equivalent to the first concentration and the excess air factor equivalent to the second concentration, with a predetermined value (S5, S6, S11, S12).

8. A regeneration control method for of a particulate filter (14) which traps particulate matter in an exhaust gas of an internal combustion engine (1), wherein the filter (14) is regenerated by burning the trapped particulate matter in a high temperature atmosphere, the method comprising:
detecting an oxygen concentration in the exhaust gas upstream of the filter as a first concentration;
detecting the oxygen concentration of the exhaust gas downstream of the filter (14) as a second concentration;
calculating a difference between the first concentration and second concentration (S5, S11); and
determining at least one of a filter actual regeneration start and end based on a comparison of the difference between the first concentration and second concentration with a predetermined value (S5, S6, S11, S12).
